# EUROPÄISCHE PATENTSCHRIFT

(11) **EP 3 403 877 B1**
(45) Veröffentlichungstag und Bekanntmachung des Hinweises auf die Patenterteilung: **22.09.2021**
(21) Anmeldenummer: 18450003.1
(22) Anmeldetag: 08.05.2018
(51) Int. Cl.: E04H 15/06, E04H 15/20, B60P 3/34

(54) **ANHÄNGER**
TRAILER
REMORQUE

(30) Priorität: 15.05.2017 AT 2022017
(43) Veröffentlichungstag der Anmeldung: 21.11.2018
(73) Patentinhaber: b-turtle GmbH, 1120 Wien (AT)
(72) Erfinder: Rammer, Gernot, A-1040 Wien (AT)
(74) Vertreter: Keschmann, Marc

(56) Entgegenhaltungen:
- WO-A1-2017/141026
- WO-A1-2017/201555
- WO-A2-2010/001259
- CN-U- 205 046 936
- US-A1- 2010 230 999
- US-B1- 8 550 538

## Beschreibung

Die Erfindung betrifft einen Anhänger umfassend einen Rahmen, eine am Rahmen befestigte Deichsel zur Verbindung des Anhängers mit einem Fahrrad, einem Motorrad oder einem Personenkraftwagen, wenigstens eine am Rahmen gelagerte Radachse mit Rädern und einen Laderaum.

Anhänger für Fahrräder, Motorräder oder mehrspurige Personenkraftwagen dienen meist dem Transport von Lasten. Weiters sind Anhänger für mehrspurige Personenkraftwagen in Form von Wohnwägen bekannt, die auf Reisen als mobile Wohn- und Schlafstätte genutzt werden können. Derartige Wohnwägen sind großbauend, haben ein großes Gewicht und sind mit hohen Anschaffungskosten verbunden.

Als mobile Schlafstätten dienen auch Zelte, insbesondere Camping- bzw. Treckingzelte. Zelte haben den Vorteil, dass sie ein geringes Gewicht haben und in der Regel so zusammengefaltet werden können, dass sie ein kleines Transportvolumen haben. Tragbare Zelte bieten jedoch eine sehr beschränkte Raumgröße.

Weiters sind Zeltanhänger bzw. sog. Faltcaravans bekannt. Dabei handelt es sich um Anhänger für Kraftfahrzeuge, aus denen sich ein Zelt oder ein vollständiger Wohnwagen zum Campen entfalten lässt. Im aufgefalteten Zustand bleibt das Zelt mit dem Anhänger fest verbunden. Im Vergleich zu gewöhnlichen Wohnwagen haben Falt-/Klappcaravans eine während der Fahrt teilweise deutlich verminderte Bauhöhe, bieten daher während der Fahrt einen geringeren Luftwiderstand und vermindern daher den Kraftstoffverbrauch des Zugfahrzeugs. Herkömmliche Falt-/Klappcaravans verfügen über einen aufklappbare, starre Zeltplattform, auf welcher das Zelt oder ein Teilbereich des Zelts aufgebaut wird.

Ein gattungsgemäßer Zeltanhänger geht aus Dokument US 2010/230999 A1 hervor. Darüber hinaus ist Dokument WO 2017/201555 A1 bekannt, dessen Inhalt als Stand der Technik gemäß Art. 54(3) EPÜ gilt.

Nachteilig sind hierbei das hohe Gewicht und die aufwändige Konstruktion der Zeltplattform. Die Zeltplattform dient bei solchen Ausbildungen als Liegefläche, sodass die Zeltplattform im aufgeklappten Zustand eine bestimmte Mindestgröße aufweisen muss. Dies hat zur Folge, dass die Zeltplattform auch im zusammengeklappten Zustand eine bestimmte Grundfläche beansprucht, sodass der entsprechende Anhänger nicht beliebig kleinbauend gestaltet werden kann und in der Regel insbesondere eine Breite von wenigstens ca. 1 Meter aufweisen muss. Dies hat zur Folge, dass herkömmliche Zeltanhänger als Anhänger für mehrspurige Kraftfahrzeuge geeignet sind, nicht jedoch als Anhänger für einspurige Fahrzeuge, wie z.B. für Fahrräder oder für Motorräder.

Die vorliegende Erfindung zielt daher darauf ab, einen Zeltanhänger derart weiterzubilden, dass das Gewicht und die Größe reduziert werden können, sodass auch eine Verwendung mit einem einspurigen Fahrzeug ermöglicht wird.

Zur Lösung dieser Aufgabe sieht die Erfindung bei einem Anhänger der eingangs genannten Art vor, dass auf dem Laderaum ein Zeltboden angeordnet ist, der von einem aufblasbaren, im aufgeblasenen Zustand plattenartigen Körper gebildet ist, dessen Deck- und Bodenlage aus einem flexiblen Material bestehen und durch eine Vielzahl von Verbindungsfäden oder -fasern miteinander verbunden und im aufgeblasenen Zustand in einem maximalen Normalabstand zueinander gehalten sind, wobei Mittel zum Zusammenhalten des Zeltbodens im zusammengefalteten Zustand vorgesehen sind und der Zeltboden im aufgeblasenen Zustand über den Rahmen vorragt.

Ein solcher Boden bildet im aufgeblasenen Zustand ein formstabiles plattenförmiges Element aus, sodass auf eine gesonderte Zeltplattform verzichtet werden kann. Der aufblasbare plattenförmige Bodenkörper hat insbesondere eine solche Formstabilität bzw. Steifheit, dass dieser die Funktion einer Zeltplattform ersetzt, wobei ein Teilbereich des Bodens im aufgeblasenen Zustand über den Rand des Anhängerrahmens vorragt und belastbar ist, ohne dass ein Umknicken oder dgl. des vorragenden Bereichs zu befürchten ist. Im nicht aufgeblasenen Zustand hingegen ist der Boden nicht formstabil, da die Deck- und die Bodenlage des aufblasbaren Körpers aus einem flexiblen Material bestehen, das so zusammengelegt werden kann, dass der Boden ggf. gemeinsam mit den übrigen Zeltelementen innerhalb des Umrisses des Anhängerrahmens verstaut werden kann, wobei die Erfindung am Anhänger Mittel zum Zusammenhalten des Zeltbodens im zusammengefalteten Zustand vorsieht.

Die erforderliche Formstabilität und Steifigkeit des aufblasbaren Bodenkörpers wird dadurch erreicht, dass die Deck- und die Bodenlage durch eine Vielzahl von Verbindungsfäden oder -fasern miteinander verbunden und im aufgeblasenen Zustand in einem maximalen Normalabstand zueinander gehalten sind. Die Deck- und die Bodenlage werden hierbei von den Fäden bzw. Fasern vorzugsweise parallel zueinander gehalten, sodass tatsächlich eine plattenförmige Bodenkonstruktion entsteht. Die Fäden bzw. Fasern verlaufen dabei durch den mit Luft gefüllten Hohlraum des Körpers und erstrecken sich zwischen Deck -und Bodenlage vorzugsweise in zu den Lagen senkrechter Richtung. Die Fasern bzw. Fäden sind hierbei in einer solchen Dichte vorgesehen, dass die Deck- und die Bodenlage im aufgeblasenen Zustand jeweils eine im Wesentlichen ebene Fläche ausbilden, sodass der im Inneren des Körpers herrschende Überdruck keine Wölbungen hervorruft. Die Fasern bzw. Fäden sind hierbei vorzugsweise gleichmäßig über die Fläche der Deck- bzw. Bodenlage verteilt.

Bevorzugt ist vorgesehen, dass das flexible Material zur Aufnahme eines Überdrucks im Inneren des aufblasbaren Zeltbodens von 0,3 - 1 bar, insbesondere 0,3 - 0,5 bar ausgebildet ist. Ein derartiger Überdruck führt dazu, dass der Bodenkörper eine besonders hohe Formstabilität bzw. Steifigkeit erhält.

Eine Erhöhung der Stabilität wird nach einer bevorzugten Weiterbildung der Erfindung dadurch erreicht, dass die Verbindungsfäden bzw. -fasern miteinander verwoben sind. Aufblasbare Hohlkörper, deren Deck- und Bodenfläche durch miteinander verwobene Fäden bzw. Fasern miteinander verbunden sind, werden auch als Drop-Stitch-Konstruktionen bezeichnet, die hauptsächlich für Wassersportgeräte, nämlich sogenannte Stand Up Paddling (SUP)Boards, zum Einsatz gelangen. Das Prinzip der Drop-Stitch-Konstruktion beruht darauf, die Decken- und Bodenlage des Körpers mit vertikalen Verbindungsfasern zu verknüpfen und auch unter hohem Innendruck in der gewünschten Form zu halten. Die miteinander verwobenen Fasern bilden im Inneren des aufblasbaren Körpers ein Gewebe, das durch die große Zahl an Verknotungen sehr reißfest und formstabil ist und besonders hohen Belastungen standhält, dabei aber dennoch im unaufgepumpten Zustand kompakt zusammenlegbar ist.

Neben dem reduzierten Packmaß hat der erfindungsgemäße Zeltboden weiters eine erhebliche Gewichtsersparnis zur Folge. Die Gewichtsersparnis spielt besonders im Offroad-Bereich eine große Rolle.

Der aufblasbare Zeltboden kann entweder fest mit dem Anhänger verbunden oder auf Grund seines geringen Gewichtes vom Anhänger abnehmbar sein. Die abnehmbare Ausführung hat den Vorteil, dass die Aufstellung des Zelts vom Anhänger unabhängig ist und auch eine Aufstellung unmittelbar am Boden ermöglicht wird. Der erfindungsgemäße Zeltboden stellt hierbei eine Kälteisolierung gegenüber dem Untergrund sicher. Der Boden ermöglicht den Einsatz des Zeltes auf beliebigen Bodenflächen, wie z.B. am Erd-, Wald- oder Gesteinsboden, wo Bodenunebenheiten in einfacher Weise ausgeglichen werden können. Der Boden stellt eine Barriere gegenüber Wassereintritt dar und kann sowohl auf sehr nassen Untergründen als auch bei Starkregen eingesetzt werden. Auf Grund der Höhe des aufgeblasenen Bodens wird ein Wassereintritt von unten wirksam verhindert. Der Boden ist weiters schwimmfähig, sodass auch ein Einsatz auf einem Gewässer denkbar ist.

Der aufblasbare Boden kann vorzugsweise mit einer Heizung ausgestattet sein, welche die Luft im Inneren des aufgeblasenen Bodens beheizt. Auf diese Art und Weise kann das Zelt mit einer Bodenheizung versehen werden. Im gasgefüllten Hohlraum des Bodens können beispielsweise Heizfäden (z.B. aus Carbon) angeordnet sein.

Bevorzugt ist vorgesehen, dass das flexible Material der Deck- und Bodenlage ein Kunststoffmaterial, wie z.B. PVC, Polycotton oder Nylon, ist. Ein solches Material zeichnet sich durch eine hohe Reißfestigkeit aus. Die Deck- und/oder die Bodenlage kann an ihrer jeweiligen Außenseite mit einer Schicht aus Schaumstoff bzw. eines weiteren Aufblaskörpers versehen sein, um den Liegekomfort zu verbessern.

Die Fäden bzw. Fasern, welche die Deck- und die Bodenlage des aufblasbaren Körpers miteinander verbinden, bestehen vorzugsweise aus Kunststoff.

Zum Abstützen der vom Rahmen vorragenden Bereiche des aufblasbaren Bodens am Untergrund ist bevorzugt vorgesehen, dass an wenigstens zwei Eckbereichen des Zeltbodens Abstützelemente befestigbar bzw. befestigt sind. Die Abstützelemente können dabei klappbar ausgebildet sein.

Gemäß einer bevorzugten Ausführung kann der Anhänger weiters ein Traggerüst und eine am Traggerüst abgestützte Zelthaut umfassen, die mit dem Zeltboden zu einem Zelt aufgebaut werden können. Das Traggerüst und die Zelthaut können als vom Zeltboden gesonderte Elemente ausgebildet sein, welche bei Bedarf mit dem Zeltboden durch lösbare Verbindungsmittel verbunden werden. Die Verbindungsmittel können dabei Klettverschlüsse, Reißverschlüsse, Karabiner, eine Haken-Ösen-Verbindung, oder dgl. umfassen. Alternativ kann das Traggerüst und/oder die Zelthaut dauerhaft und unlösbar mit dem aufblasbaren Zeltboden verbunden sein. Insbesondere ist bevorzugt vorgesehen, dass das Traggerüst im zusammengefalteten Zustand des Zelts am Zeltboden befestigt ist. Eine bevorzugte Ausführung sieht in diesem Zusammenhang vor, dass der aufblasbare Boden an seinen Rändern mit dem Traggerüst verbunden, insbesondere verklebt, verschweißt, vernäht oder lösbar verbunden, ist.

Eine besonders vorteilhafte Ausbildung ergibt sich, wenn auch das Traggerüst zumindest teilweise, bevorzugt aber vollständig, von wenigstens einem aufblasbaren Körper gebildet ist. Insbesondere weist das Traggerüst hierbei wenigstens ein aufblasbares, insbesondere mehrfach abgewinkeltes oder gebogenes, Rohr auf.

Dadurch, dass das Traggerüst des Zelts aufblasbar gestaltet ist, wird ein einfacher und schneller Auf- und Abbau gewährleistet. Das aufblasbare Rohr weist bevorzugt einen zwei- oder mehrschichtigen Aufbau auf. Ein Innenkörper bildet hierbei wenigstens eine aufblasbare Kammer aus und besteht bevorzugt aus einem gut dehnbaren Material, insbesondere einem Material mit einem Streckvermögen von min. 150%. Der Innenkörper besteht bevorzugt aus einem Polyurethan-Schlauch. Um den aufblasbaren Innenkörper herum ist ein strapazfähiger, abriebfester Außenschlauch angeordnet, an den sich der Innenkörper im aufgeblasenen Zustand innen eng anlegt. Das Material des Außenschlauchs ist bevorzugt zugfest ausgebildet und entsprechend der gewünschten Form des Traggerüsts vorgeformt. Der Außenschlauch besteht bevorzugt aus einem Gewebe, insbesondere einem Gewebe aus Polyamid oder Polyester, wie z.B. aus Cordura®.

Die Ausführung des Traggerüsts als aufblasbarer Körper hat weiters den Vorteil, dass das Zelt ein geringeres Gesamtgewicht aufweist und der Aufbau durch eine einzige Person möglich ist.

Eine bevorzugte Ausbildung sieht in diesem Zusammenhang vor, dass das Traggerüst von einem einzigen, im aufgeblasenen Zustand mehrfach abgewinkelten bzw. gebogenen, vorzugsweise in sich geschlossenen, Rohr gebildet ist. Das einzige Rohr ist hierbei bevorzugt so geformt, dass es einen in sich geschlossenen Körper ausbildet, der weder ein Ende noch einen Anfang aufweist. Die Ausbildung des Traggerüsts aus einem in sich geschlossenen, aufblasbaren Rohr führt im aufgeblasenen Zustand zu einer überaus stabilen und steifen Konstruktion, wobei das Rohr, im Falle eines mehrschichtigen Aufbaus insbesondere dessen Außenschlauch, so vorgeformt ist, dass sich im aufgeblasenen Zustand automatisch die gewünschte Form des Traggerüsts einstellt.

Eine besonders vorteilhafte und stabile Form des Traggerüsts aus einem in sich geschlossenen Körper gelingt gemäß einer bevorzugten Weiterbildung der Erfindung dadurch, dass das rohrförmige Traggerüst wenigstens zwei U-förmig ausgebildete Rohrabschnitte mit gleicher Orientierung der U-Form und wenigstens zwei vorzugsweise gerade ausgebildete Verbindungsrohrabschnitte aufweist, welche die Enden der freien Schenkel der U-Form miteinander verbinden.

Ein solcherart ausgebildetes Traggerüst erlaubt einen überaus flexiblen Einsatz des Traggerüsts, wobei das Traggerüst entweder so aufgestellt werden kann, dass die Verbindungsrohrabschnitte die Bodenrohre des Traggerüsts ausbilden, oder so, dass die Verbindungsschenkel der U-Form der U-förmig ausgebildeten Rohrabschnitte die Bodenrohre des Traggerüsts ausbilden.

Eine bevorzugte Weiterbildung sieht vor, dass die von den U-förmig ausgebildeten Rohrabschnitten jeweils aufgespannten Ebenen zueinander geneigt angeordnet sind und insbesondere vom aufblasbaren Boden ausgehend nach oben hin divergierend verlaufen. Das Traggerüst benötigt somit eine relativ geringe Standfläche und unterstützt nach oben hin einen ausladenden Bereich der Zelthaut, sodass insgesamt ein relativ zur benötigten Standfläche großer Bereich von der Zelthaut überdeckt werden kann.

Das wenigstens eine aufblasbare Rohr des Traggerüsts kann wie bereits erwähnt aus einem Kunststoff-, insbesondere Polymermaterial bestehen. Dies ermöglicht eine besonders einfache und feste Verbindung mit dem Kunststoffmaterial des aufblasbaren Bodens. Das aufblasbare Rohr des Traggerüsts kann zu diesem Zweck eine in Längsrichtung des Rohrs verlaufende Anschlusslasche aufweisen, die mit dem aufblasbaren Boden verbunden, insbesondere verklebt oder verschweißt ist.

Der mit Luft befüllbare Hohlraum des Bodens und der mit Luft befüllbare Hohlraum des Rohres des Traggerüsts sind vorzugsweise nicht miteinander verbunden. Dies ermöglicht es, das Druckniveau entsprechend den jeweiligen Bedürfnissen anzupassen, wobei der Überdruck im aufblasbaren Boden vorzugsweise höher gewählt ist als im Traggerüst.

Das Traggerüst kann einerseits mit dem aufblasbaren Boden und andererseits mit der Zelthaut direkt verbunden sein. Bevorzugt ist in diesem Zusammenhang vorgesehen, dass die Zelthaut mit dem Traggerüst, insbesondere wenigstens einem aufblasbaren Rohr des Traggerüsts, verbunden, insbesondere verklebt, verschweißt oder vernäht, ist.

Wie bereits erwähnt kann der Zeltboden so zusammengelegt werden, dass der Boden ggf. gemeinsam mit den übrigen Zeltelementen innerhalb des Umrisses des Anhängerrahmens verstaut werden kann. Die Mittel zum Zusammenhalten des Zeltbodens im zusammengelegten Zustand umfassen vorzugsweise eine Zelthülle aus einem wasserdichten Kunststoff, die den Zeltboden im zusammengefalteten Zustand abdeckt. Vorzugsweise umfasst die Zelthülle hierbei lösbare Verbindungsmittel, wie z.B. einen Reißverschluss, mit denen die Zelthülle an wenigstens drei Rändern mit einem anhängerfesten Element verbindbar ist. Alternativ kann die Zelthülle auch unlösbar oder fest mit einem anhängerfesten Element verbunden sein.

Der erfindungsgemäße Anhänger umfasst einen Laderaum, der zur Aufnahme von verschiedenem Ladegut vorgesehen ist. Insbesondere kann der Laderaum einen elektrischen Energiespeicher, wie z.B. eine Batterie aufnehmen. Weiters kann der Laderaum eine Pumpe zum Aufblasen des Zeltbodens und/oder des Traggerüstes aufnehmen. Bevorzugt ist die Pumpe elektrisch angetrieben und kann vom elektrischen Energiespeicher mit Energie versorgt werden.

Bevorzugt ist der Laderaum oben mit einem Deckel verschlossen, der aufklappbar am Rahmen angelenkt ist, wobei der Zeltboden ggf. gemeinsam mit der Zelthülle am Deckel befestigt ist. Weiters kann der Laderaum auch eine seitliche Zugangsöffnung aufweisen, damit der Laderaum auch bei aufgebautem Zelt zugänglich ist. Der Laderaum bietet auch Platz für den Transport anderer Gegenstände, wie z.B. Reiseequipment, Einkäufe, Lebensmittel uvm.

Insbesondere bei.Anhängern, die mit dem Fahrrad oder dem Motorrad gezogen werden, besteht das Problem, dass der Anhänger bezüglich der Radachse möglichst gleichmäßig beladen werden muss, um eine übermäßige Deichsellast zu vermeiden. Eine gleichmäßige Beladung ist jedoch nicht in allen Anwendungsfällen möglich. Um hier Abhilfe zu schaffen, sieht die Erfindung bei einer bevorzugten Weiterbildung vor, dass die wenigstens eine Achse in Achsennormalrichtung verstellbar am Rahmen angeordnet und in wenigstens zwei Verstellpositionen fixierbar ist oder dass der Laderaum in Achsennormalrichtung relativ zur Achse verstellbar angeordnet und in wenigstens zwei Verstellpositionen fixierbar ist. Die Radachse kann auf diese Weise unter Berücksichtigung der jeweiligen Beladungsverteilung näher an den Schwerpunkt des Anhängers gebracht werden, sodass die Deichsellast verringert wird.

Bei einer Ausführung des erfindungsgemäßen Anhängers zur Verbindung mit einem Fahrrad ist bevorzugt vorgesehen, dass die Breite des Anhängers, insbesondere des Rahmens ≤ 80cm, insbesondere ≤ 70cm, beträgt. Die Länge des Anhängers (ohne Deichsel) beträgt bevorzugt ≤ 100cm. Dies gewährleistet die für typische Fahrradwege erforderliche Kurvengängigkeit.

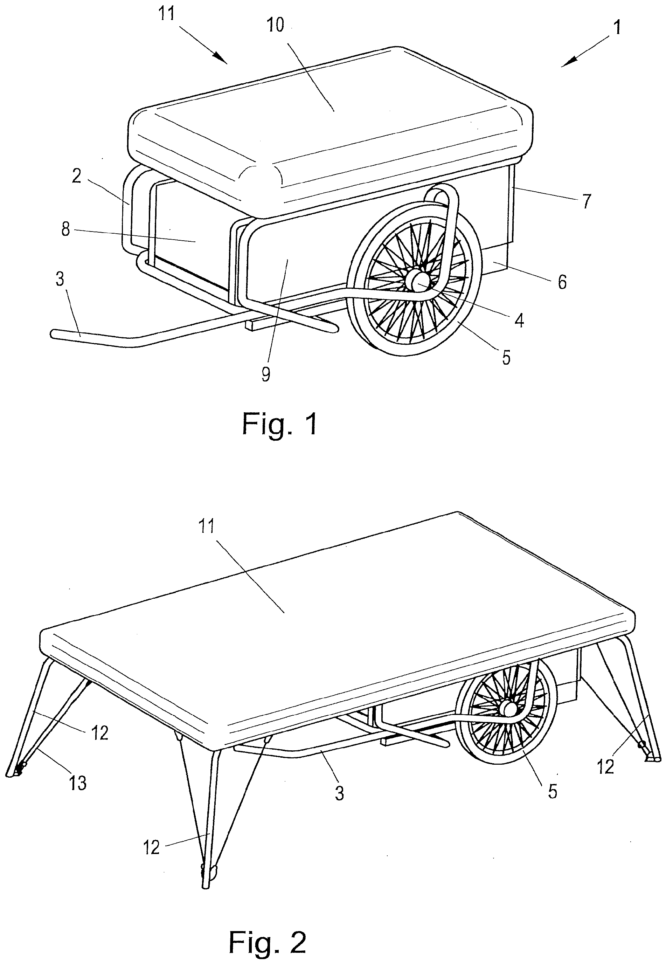

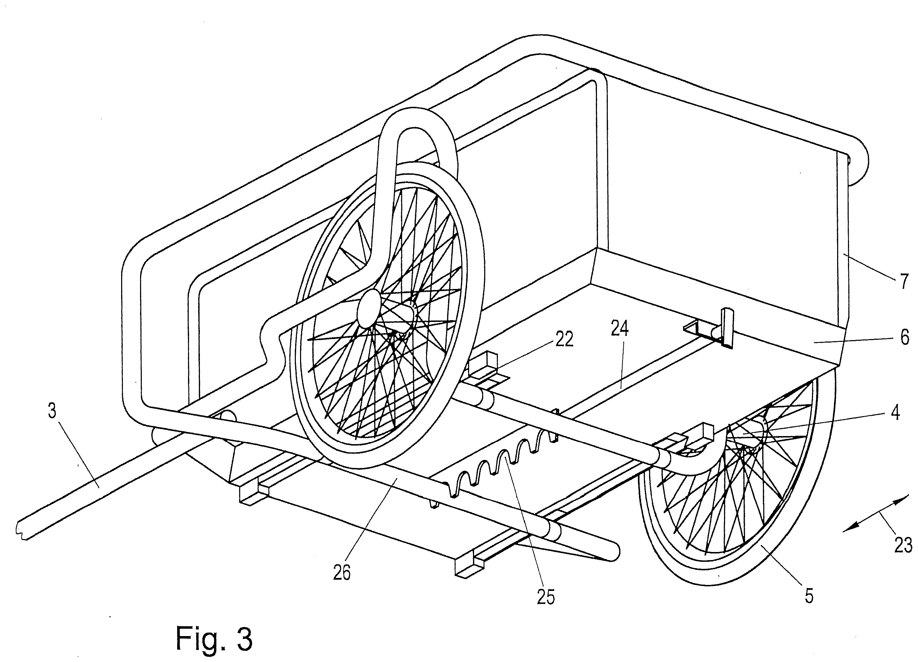

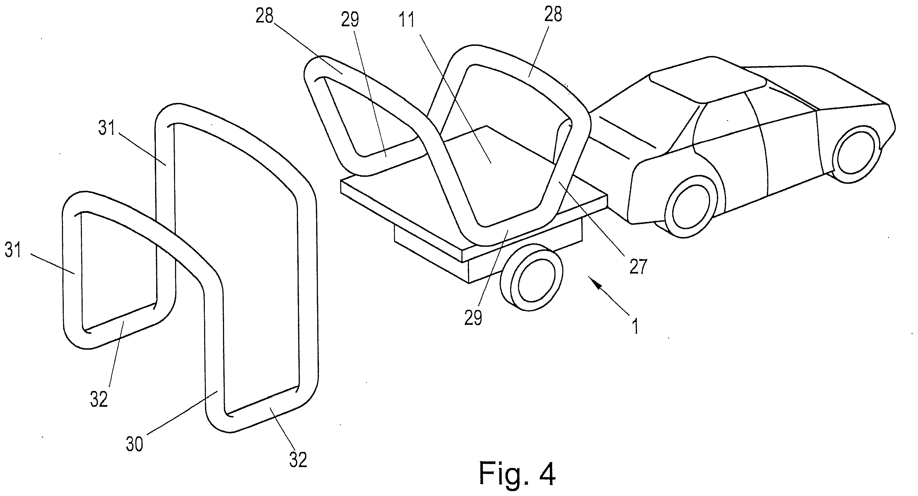

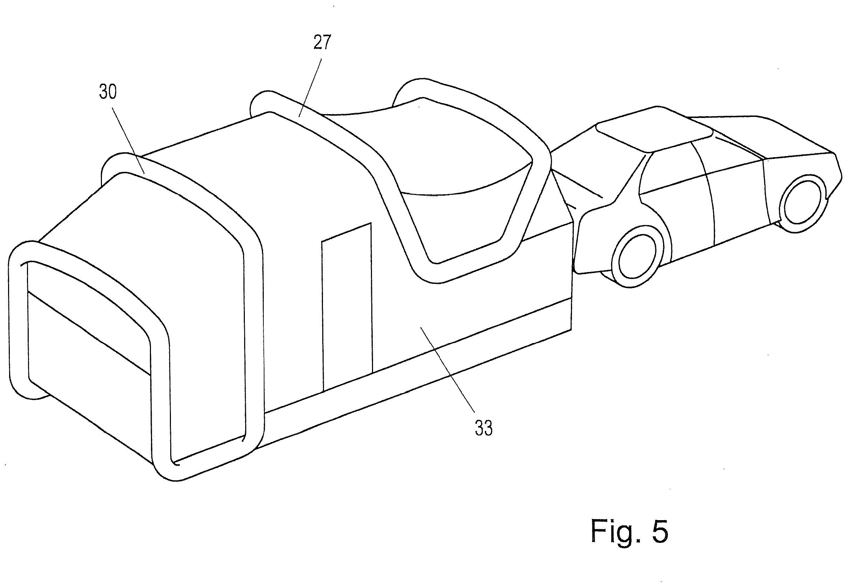

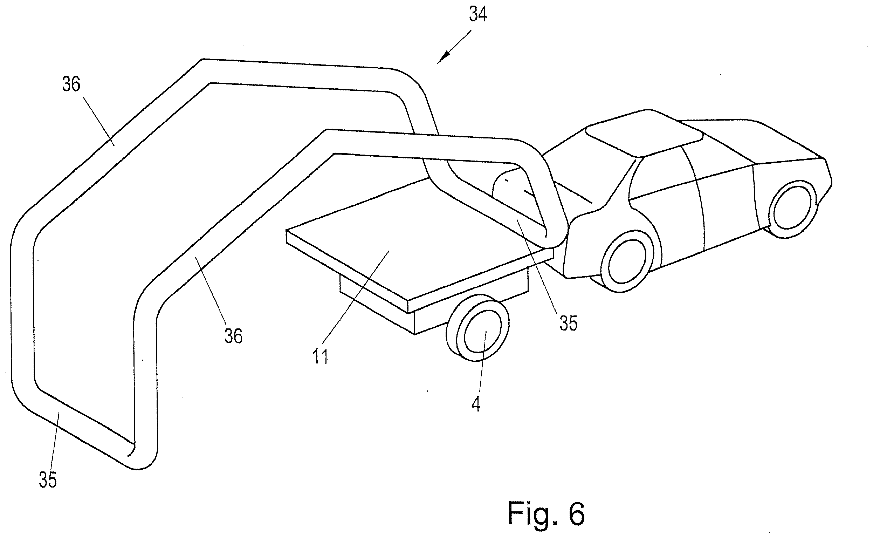

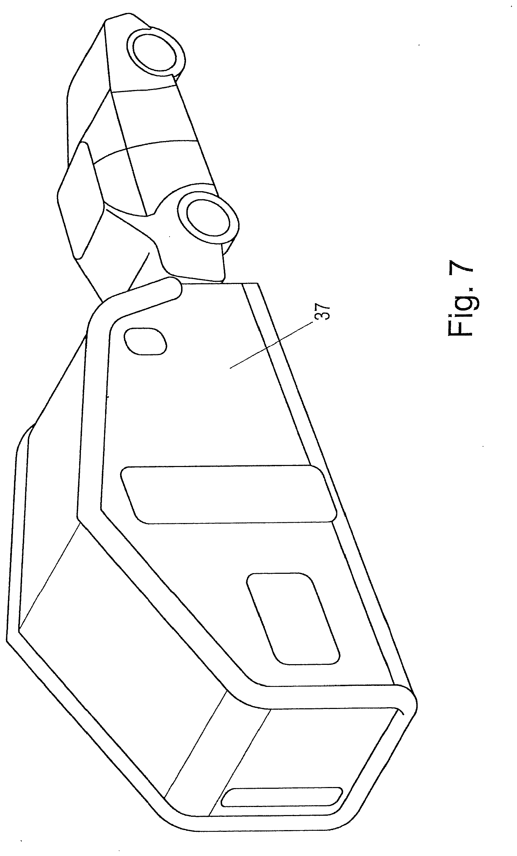

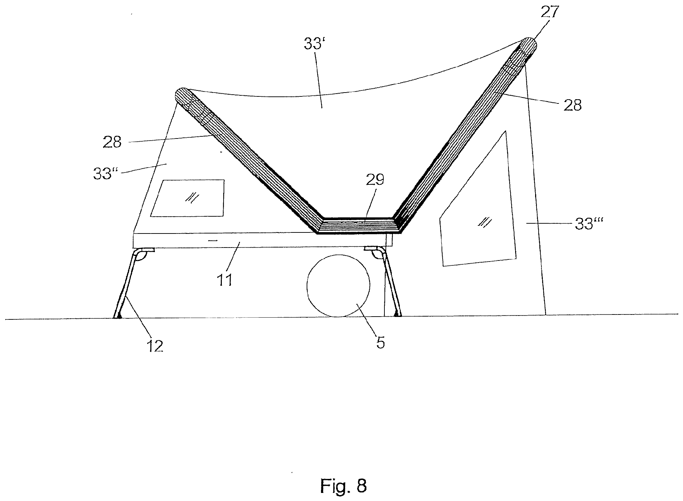

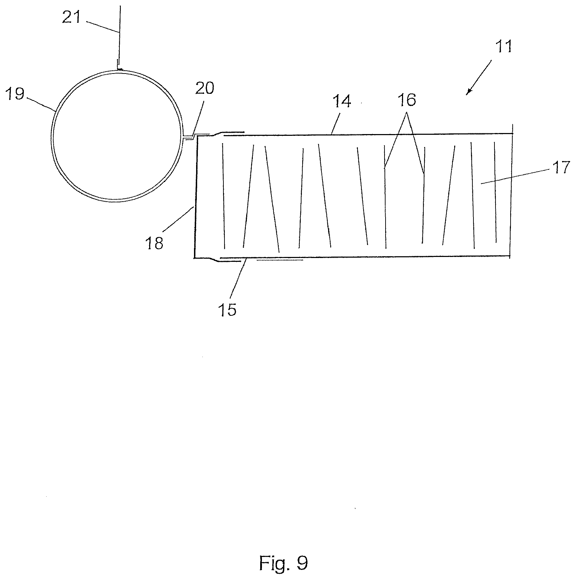

Die Erfindung wird nachfolgend anhand von in der Zeichnung schematisch dargestellten Ausführungsbeispielen näher erläutert. In dieser zeigen Fig. 1 schematisch einen Anhänger für ein Fahrrad mit einem Zelt im zusammengefalteten Zustand, Fig. 2 den Anhänger gemäß Fig. 1 mit entfaltetem und aufgeblasenem Zeltboden, Fig. 3 eine Unteransicht des Anhängers, Fig. 4 einen Anhänger für einen PKW mit entfaltetem und aufgeblasenem Zeltboden sowie mit einer ersten Ausführung eines aufgeblasenen Traggerüsts, wobei die Zelthaut nicht dargestellt ist, Fig. 5 eine Ausführung gemäß Fig. 4 mit Zelthaut, Fig. 6 einen Anhänger für einen PKW mit entfaltetem und aufgeblasenem Zeltboden sowie mit einer zweiten Ausführung des aufgeblasenen Traggerüsts, wobei die Zelthaut nicht dargestellt ist, Fig. 7 eine Ausführung gemäß Fig. 6 mit Zelthaut, Fig. 8 eine abgewandelte Ausbildung eines Zelts und Fig. 9 eine Detaildarstellung des aufblasbaren Bodens und der Verbindung des Traggerüsts mit dem Boden.

In Fig. 1 ist ein erfindungsgemäßer Anhänger für ein Fahrrad mit 1 bezeichnet und umfasst einen Rahmen 2, eine am Rahmen 2 befestigte Deichsel 3 zur Verbindung des Anhängers 1 mit einem Fahrrad und eine am Rahmen 2 gelagerte Radachse 4 mit Rädern 5. Der Rahmen 2 trägt eine Wanne 6, welche einen Laderaumrahmen 7 trägt. Der Laderaum 8 wird unten von der Wanne 6 und seitlich von Wänden 9 begrenzt.

Auf dem Laderaum 8 ist ein in einer Zelthülle 10 aufgenommener Zeltboden 11 angeordnet. Der Zeltboden 11 ist in der Zelthülle 10 im zusammengefalteten Zustand aufgenommen. In der Zelthülle 10 können auch die weiteren Bestandteile eines Zelts aufgenommen sein, wie z.B. das Traggerüst und die Zelthaut sowie Stützfüße 12 (Fig. 2).

Nach dem Öffnen der Zelthülle 10 kann der Zeltboden 11 auf die in Fig. 2 gezeigte Größe aufgeblasen werden. Der Zeltboden 11 ist von einem aufblasbaren, im aufgeblasenen Zustand plattenartigen Körper gebildet, dessen Deck- und Bodenlage 14,15 (Fig. 9) aus einem flexiblen Material bestehen und durch eine Vielzahl von Verbindungsfäden oder -fasern 16 miteinander verbunden sind. Auf Grund der Steifheit des Bodens 11 kann dieser über den Rand des Anhängers 1 vorragen, wie dies in Fig. 2 dargestellt ist. An den über den Rand des Anhängers 1 vorragenden drei Eckbereichen sind Stützfüße 12 angeordnet, die mit Seilen 13 gehalten sind.

In Fig. 9 ist nun ein Detail des Bodens 11 im aufgeblasenen Zustand gezeigt. Der Boden 11 ist im Querschnitt dargestellt und umfasst eine Decklage 14 und eine Bodenlage 15, die durch eine Vielzahl von Fäden oder Fasern 16 miteinander verbunden und in einem vorgegebenen Maximalabstand zueinander parallel gehalten sind. Der Hohlraum 17 ist seitlich zusätzlich von einer Seitenlage 18 begrenzt, die mit der Deck- und Bodenlage 14,15 verbunden, insbesondere verklebt oder verschweißt ist. Das Rohr des Traggerüsts ist ebenfalls im Querschnitt dargestellt und mit 19 bezeichnet. Es ist über eine Anschlusslasche 20 am Zeltboden 11 befestigt, insbesondere verklebt oder verschweißt. Am Rohr 19 ist weiters die Zelthaut befestigt, wie mit 21 schematisch angedeutet.

In der Unteransicht gemäß Fig. 3 ist die Verstellbarkeit der Wanne 6 relativ zum Rahmen 2 bzw. relativ zur Achse 4 dargestellt. Es ist ersichtlich, dass die Wanne 6 auf einer am Rahmen 2 befestigten Schlittenführung 22 in Richtung des Doppelpfeils 23, d.h. im rechten Winkel zur Achse 4, verschiebbar geführt ist. Die Fixierung der Wanne 6 in der jeweiligen Veschiebepostion erfolgt mit Hilfe der Stange 24, die mit einer Vielzahl von Ausnehmungen 25 versehen ist, welche mit der Rahmenstange 26 in Eingriff gebracht werden können.

Fig. 4 zeigt eine Ausführung des Anhängers für mehrspurige PKW. Der Anhänger 1 ist grundsätzlich so aufgebaut wie der Anhänger gemäß den Fig. 1, 2 und 3, jedoch in einer breiteren Ausführung. In Fig. 5 ist der Zeltboden 11 im entfalteten und aufgeblasenen Zustand dargestellt und trägt ein Traggerüst in Form eines aufblasbaren Rohres 27, das an beiden Längsseiten des Zeltbodens 11 befestigt ist. Das rohrförmige Traggerüst 27 weist zwei U-förmig ausgebildete Rohrabschnitte 28 und zwei gerade ausgebildete Verbindungsrohrabschnitte 29 auf, welche die Enden der freien Schenkel der U-Form miteinander verbinden. Die Verbindungsrohrabschnitte 29 bilden dabei die Bodenrohre des Traggerüsts aus, wobei die Bodenrohre mit dem Zeltboden 11 verbunden sind. Der Zeltboden 11 bildet hierbei die Liegefläche des Zelts.

Für die Ausbildung eines weiteren Aufenthaltsbereichs des Zelts umfasst das Traggerüst außerdem ein weiteres aufblasbares Rohr 30, das ebenfalls aus zwei U-förmig ausgebildeten Rohrabschnitten 31 und zwei gerade ausgebildeten Verbindungsrohrabschnitten 32 besteht, welche die Enden der freien Schenkel der U-Form miteinander verbinden.

In Fig. 5 ist nun zusätzlich die Zelthaut 33 dargestellt, die den Zwischenraum zwischen den einzelnen Rohrabschnitten überspannt.

Bei der Ausbildung gemäß Fig. 6 ist ein einziges Traggerüst 34 in Form eines aufblasbaren Rohres vorgesehen, das zwei Querrohrabschnitte 35 umfasst, von denen der vordere Querrohrabschnitt 35 an dem dem Fahrzeug zugewandten Ende des Zeltbodens 11 befestigt ist und der hintere Querrohrabschnitt 35 am Untergrund aufliegt. Die beiden Querrohrabschnitte 35 werden mit dachförmigen Rohrabschnitten 36 verbunden, die sich im Wesentlichen in Längsrichtung erstrecken.

In Fig. 7 ist nun zusätzlich die Zelthaut 37 dargestellt, die den Zwischenraum zwischen den einzelnen Rohrabschnitten überspannt.

In Fig. 8 ist eine weitere abgewandelte Ausbildung des Zelts dargestellt, wobei vom Anhänger 1 lediglich die Räder 5 dargestellt sind. Das Zelt umfasst wiederum einen Zeltboden 11, der im Fig. 8 in entfaltetem und aufgeblasenem Zustand dargestellt ist und über den Anhänger 1 vorragt. Der Zeltboden 11 trägt ein Traggerüst in Form eines aufblasbaren Rohres 27, das an beiden Längsseiten des Zeltbodens 11 befestigt ist. Das rohrförmige Traggerüst 27 weist zwei U-förmig ausgebildete Rohrabschnitte 28 und zwei gerade ausgebildete Verbindungsrohrabschnitte 29 auf, welche die Enden der freien Schenkel der U-Form miteinander verbinden. Die Verbindungsrohrabschnitte 29 bilden dabei die Bodenrohre des Traggerüsts aus, wobei die Bodenrohre mit dem Zeltboden 11 verbunden sind. Die Zelthaut 33 überspannt mit einem ersten Abschnitt 33' den vom Traggerüst 27 begrenzten Bereich, mit einem zweiten Abschnitt 33" einen Bereich zwischen dem linken U-förmigen Rohrabschnitt 28 und dem Zeltboden 11 und mit einem dritten Abschnitt 33''' einen Bereich zwischen dem rechten U-förmigen Rohrabschnitt 28 und dem Untergrund.

## Patentansprüche

1. Anhänger umfassend einen Rahmen (2), eine am Rahmen (2) befestigte Deichsel (3) zur Verbindung des Anhängers (1) mit einem Fahrrad, einem Motorrad oder einem Personenkraftwagen, wenigstens eine am Rahmen (2) gelagerte Radachse (4) mit Rädern (5) und einen Laderaum (8), wobei auf dem Laderaum (8) ein Zeltboden (11) angeordnet ist, **dadurch gekennzeichnet, dass** der Zeltboden von einem aufblasbaren, im aufgeblasenen Zustand plattenartigen Körper gebildet ist, dessen Deck- und Bodenlage (14,15) aus einem flexiblen Material bestehen und durch eine Vielzahl von Verbindungsfäden oder -fasern (16) miteinander verbunden und im aufgeblasenen Zustand in einem maximalen Normalabstand zueinander gehalten sind, wobei Mittel zum Zusammenhalten des Zeltbodens (11) in zusammengefaltetem Zustand vorgesehen sind und der Zeltboden (11) im aufgeblasenen Zustand über den Rahmen (2) vorragt.

2. Anhänger nach Anspruch 1, **dadurch gekennzeichnet, dass** die Mittel zum Zusammenhalten des Zeltbodens (11) eine Zelthülle (10) aus einem wasserdichten Kunststoff umfasst, die den Zeltboden (11) im zusammengefalteten Zustand abdeckt.

3. Anhänger nach Anspruch 2, **dadurch gekennzeichnet, dass** die Zelthülle (10) lösbare Verbindungsmittel, wie z.B. einen Reißverschluss umfasst, mit denen die Zelthülle (10) an wenigstens drei Rändern mit einem anhängerfesten Element verbindbar ist.

4. Anhänger nach Anspruch 1, 2 oder 3, **dadurch gekennzeichnet, dass** die wenigstens eine Achse (4) in Achsennormalrichtung verstellbar am Rahmen (2) angeordnet und in wenigstens zwei Verstellpositionen fixierbar ist oder dass der Laderaum (8) in Achsennormalrichtung relativ zur Achse (4) verstellbar angeordnet und in wenigstens zwei Verstellpositionen fixierbar ist.

5. Anhänger nach einem der Ansprüche 1 bis 4, **dadurch gekennzeichnet, dass** an wenigstens zwei Eckbereichen des Zeltbodens (11) Abstützelemente zum Abstützen des vom Rahmen (2) vorragenden Bereichs des Zeltbodens (11) am Untergrund befestigbar bzw. befestigt sind.

6. Anhänger nach Anspruch 5, **dadurch gekennzeichnet, dass** die Abstützelemente klappbar ausgebildet sind.

7. Anhänger nach einem der Ansprüche 1 bis 6, **dadurch gekennzeichnet, dass** der Anhänger (1) ein Traggerüst und eine am Traggerüst abgestützte Zelthaut umfasst, die mit dem Zeltboden (11) zu einem Zelt aufgebaut werden können.

8. Anhänger nach Anspruch 7, **dadurch gekennzeichnet, dass** das Traggerüst im zusammengefalteten Zustand des Zelts am Zeltboden (11) befestigt ist.

9. Anhänger nach Anspruch 7 oder 8, **dadurch gekennzeichnet, dass** das Traggerüst wenigstens ein aufblasbares, insbesondere mehrfach abgewinkeltes oder gebogenes Rohr (27) aufweist.

10. Anhänger nach Anspruch 9, **dadurch gekennzeichnet, dass** das Traggerüst von einem einzigen, im aufgeblasenen Zustand mehrfach abgewinkelten bzw. gebogenen, vorzugsweise in sich geschlossenen, Rohr (27) gebildet ist.

11. Anhänger nach Anspruch 9 oder 10, **dadurch gekennzeichnet, dass** das rohrförmige Traggerüst wenigstens zwei U-förmig ausgebildete Rohrabschnitte (28) mit gleicher Orientierung der U-Form und wenigstens zwei vorzugsweise gerade ausgebildete Verbindungsrohrabschnitte (29) aufweist, welche die Enden der freien Schenkel der U-Form miteinander verbinden.

12. Anhänger nach Anspruch 11, **dadurch gekennzeichnet, dass** die Verbindungsrohrabschnitte (29) die Bodenrohre des Traggerüsts ausbilden.

13. Anhänger nach Anspruch 11, **dadurch gekennzeichnet, dass** die Verbindungsschenkel der U-Form der U-förmig ausgebildeten Rohrabschnitte die Bodenrohre des Traggerüsts ausbilden.

14. Anhänger nach Anspruch 11, 12 oder 13, **dadurch gekennzeichnet, dass** die von den U-förmig ausgebildeten Rohrabschnitten jeweils aufgespannten Ebenen zueinander geneigt angeordnet sind und insbesondere vom aufblasbaren Boden ausgehend nach oben hin divergierend verlaufen.

15. Anhänger nach einem der Ansprüche 7 bis 14, **dadurch gekennzeichnet, dass** die Zelthaut mit dem Traggerüst, insbesondere wenigstens einem aufblasbaren Rohr (27) des Traggerüsts, verbunden, insbesondere verklebt, verschweißt oder vernäht, ist.

## Claims

1. Trailer comprising a frame (2), a drawbar (3) attached to the frame (2) for connecting the trailer (1) to a bicycle, a motorcycle or a passenger car, at least one wheel axle (4) supported on the frame (2) and having whells (5) and a loading space (8), wherein a tent floor (11) is arranged on the loading space (8), **characterized in that** the tent floor is formed by an inflatable, in the inflated state plate-like body, the top and bottom layer of which (14,15) consist of a flexible material and are connected to one another by numerous connecting threads or fibers (16) and are kept at a maximum normal distance from one another when inflated, wherein means for holding the tent floor (11) together in the folded state are provided and the tent floor (11) protrudes beyond the frame (2) when inflated.

2. Trailer according to claim 1, **characterized in that** the means for holding the tent floor (11) together comprises a tent shell (10) made of a waterproof plastic which covers the tent floor (11) in the folded state.

3. Trailer according to claim 2, **characterized in that** the tent shell (10) comprises detachable connecting means, such as a zip fastener, with which the tent shell (10) can be connected at at least three edges to an element fixed to the trailer.

4. Trailer according to claim 1, 2 or 3, **characterized in that** the at least one axle (4) is arranged on the frame (2) so as to be adjustable in the axis normal direction and can be fixed in at least two adjustment positions or that the loading space (8) is arranged to be adjustable in the axis normal direction relative to the axle (4) and can be fixed in at least two adjustment positions.

5. Trailer according to one of claims 1 to 4, **characterized in that** at at least two corner areas of the tent floor (11) support elements for supporting the area of the tent floor (11) protruding from the frame (2) can be or are attached to the ground.

6. Trailer according to claim 5, **characterized in that** the support elements are designed to be foldable.

7. Trailer according to any one of claims 1 to 6, **characterized in that** the trailer (1) comprises a supporting frame and a tent shell supported on the supporting frame, which can be built up with the tent floor (11) to form a tent.

8. Trailer according to claim 7, **characterized in that** the supporting frame is attached to the tent floor (11) when the tent is folded.

9. Trailer according to claim 7 or 8, **characterized in that** the supporting frame has at least one inflatable, in particular multiple angled or bent tube (27).

10. Trailer according to claim 9, **characterized in that** the supporting frame is formed by a single tube (27) which is angled or bent several times in the inflated state, preferably closed with itself.

11. Trailer according to claim 9 or 10, **characterized in that** the tubular supporting frame comprises at least two U-shaped tube sections (28) with the same orientation of the U-shape and at least two preferably straight connecting tube sections (29) which interconnect the ends of the free legs of the U-shape.

12. Trailer according to claim 11, **characterized in that** the connecting tube sections (29) form the bottom tubes of the supporting frame.

13. Trailer according to claim 11, **characterized in that** the connecting legs of the U-shape of the U-shaped tube sections form the bottom tubes of the supporting frame.

14. Trailer according to claim 11, 12 or 13, **characterized in that** the planes spanned by the U-shaped tube sections are arranged inclined to one another and in particular diverge upwards from the inflatable floor.

15. Trailer according to any one of Claims 7 to 14, **characterized in that** the tent shell is connected, in particular glued, welded or sewn to the supporting frame, in particular to at least one inflatable tube (27) of the supporting structure.

## Revendications

1. Remorque comprenant un châssis (2), un timon (3) fixé au châssis (2) pour relier la remorque (1) à un vélo, une moto ou une voiture, au moins un essieu de roue (4) monté sur le cadre (2) avec des roues (5) et un espace de chargement (8), dans laquelle un sol de tente (11) est disposée sur l'espace de chargement (8), **caractérisée en ce que** le sol de tente est formé par un corps gonflable qui a la forme d'une plaque à l'état gonflé, et dont les couches supérieure et inférieure (14, 15) se composent d'un matériau souple et sont reliées les unes aux autres par une pluralité de fils ou fibres de liaison (16), et sont maintenus à une distance normale maximale les uns des autres à l'état gonflé, dans laquelle des moyens sont prévus pour garder le sol de tente (11) ensemble dans l'état replié, et le sol de tente (11) fait saillie au-delà du cadre (2) à l'état gonflé.

2. Remorque selon la revendication 1, **caractérisée en ce que** les moyens pour garder le sol de tente (11) ensemble comprennent une coque de tente (10) en matière plastique imperméable à l'eau qui recouvre le sol de tente (11) à l'état replié.

3. Remorque selon la revendication 2, **caractérisée en ce que** la coque de tente (10) comprend des moyens de liaison amovibles, tels qu'une fermeture éclair avec laquelle la coque de tente (10) peut être reliée à un élément fixé à la remorque sur au moins trois bords.

4. Remorque selon la revendication 1, 2 ou 3, **caractérisée en ce que** l'au moins un essieu (4) est disposé sur le châssis (2) de manière réglable dans la direction normale de l'axe et peut être fixé dans au moins deux positions de réglage, ou **en ce que** l'espace de chargement (8) est agencé de manière à être réglable dans la direction normale par rapport à l'axe (4) et peut être fixé dans au moins deux positions de réglage.

5. Remorque selon l'une des revendications 1 à 4, **caractérisée en ce que** dans au moins deux zones d'angle du sol de tente (11), des éléments de support pour supporter la zone du sol de tente (11) dépassant du cadre (2) peuvent être ou sont attachés au sol.

6. Remorque selon la revendication 5, **caractérisée en ce que** les éléments de support sont conçus pour être repliables.

7. Remorque selon l'une des revendications 1 à 6, **caractérisée en ce que** la remorque (1) comprend un cadre de support et une toile de tente reposant sur le cadre de support, qui peut être combinée avec le sol de tente (11) pour construire une tente.

8. Remorque selon la revendication 7, **caractérisée en ce que** le cadre de support est fixé au sol de tente (11) à l'état replié de la tente.

9. Remorque selon la revendication 7 ou 8, **caractérisée en ce que** le cadre de support présente au moins un tube gonflable (27), en particulier coudé ou plié plusieurs fois.

10. Remorque selon la revendication 9, **caractérisée en ce que** le cadre de support est formé d'un seul tube (27) qui est coudé ou plié plusieurs fois à l'état gonflé, de préférence fermé sur soi.

11. Remorque selon la revendication 9 ou 10, **caractérisée en ce que** le cadre de support tubulaire présente au moins deux sections de tube en forme de U (28) avec la même orientation de la forme de U, et au moins deux sections de tube de raccordement (29), de préférence droites, reliant la extrémités des branches libres de la forme de U les unes aux autres.

12. Remorque selon la revendication 11, **caractérisée en ce que** les sections de tube de raccordement (29) forment les tubes inférieurs du cadre de support.

13. Remorque selon la revendication 11, **caractérisée en ce que** les branches de liaison de la forme de U des sections de tube en forme de U forment les tubes inférieurs du cadre de support.

14. Remorque selon la revendication 11, 12 ou 13, **caractérisée en ce que** les plans définis par les sections de tube en U sont disposés inclinés les uns par rapport aux autres et en particulier s'étendent en divergeant vers le haut à partir du sol gonflable.

15. Remorque selon l'une des revendications 7 à 14, **caractérisée en ce que** la toile de tente est liée, en particulier collée, soudée ou cousue au cadre de support, en particulier à au moins un tube gonflable (27) du cadre de support.
